# EUROPEAN PATENT SPECIFICATION

(11) **EP 1 284 516 B1**
(45) Date of publication and mention of the grant of the patent: **07.05.2008**
(21) Application number: 02014820.1
(22) Date of filing: 03.07.2002
(51) Int. Cl.: H01M 8/06, C01B 3/02, C01B 3/00

(54) **Supply device for use with a hydrogen source**
Zufuhrvorrichtung zum Gebrauch mit Wasserstoffquelle
Système d'alimentation pour être mis en oeuvre avec une source d'hydrogène

(30) Priority: 16.08.2001 CN 01124224
(43) Date of publication of application: 19.02.2003
(73) Proprietor: Asia Pacific Fuel Cell Technologies, Ltd., Neihu, Taipei 114 (TW)
(72) Inventor: Ys Yang, Jefferson, Asia Pacific Fuel Cell Tec.Ltd, Neihu, Taipei 114 (TW)
(74) Representative: Goddar, Heinz J.

(56) References cited:
- GB-A- 1 531 862

## Description

### Background of the Invention

### Field of the Invention

This invention is related to a supply device for use with a hydrogen source, in particular to one that is for use with a hydrogen source of a fuel cell, wherein the supply device is equipped with a heating device so as to enable endothermic reaction of metal hydride filled within the hydrogen source for discharging hydrogen from a gas discharge valve device at a constant pressure.

### Description of the Related Art

With the rapid growth of human civilization the consumption of traditional energy sources, such as coal, oil and natural gas, increases rapidly. This results in serious pollution to the global environment and causes various environmental problems such as global warming and acid rain. It has now been recognized that the existing natural energy sources are limited. Therefore, if the present rate of energy consumption continues, all existing natural energy sources will be exhausted in the near future. Accordingly, many developed countries are dedicated to research and development of new and alternative energy sources. The fuel cell is one of the most important and reasonably priced energy sources. Compared with traditional internal combustion engines, the fuel cell has many advantages such as high energy conversion efficiency, clean exhaust, low noise, and no consumption of traditional gasoline.

In brief, a fuel cell is an electrical power generation device powered by the electro-chemical reaction of hydrogen and oxygen. Basically, the reaction is a reverse reaction of the electrolysis of water, to convert the chemical energy into electrical energy. The basic structure of a fuel cell, for example, a proton exchange membrane fuel cell, comprises a plurality of cell units. Each cell unit comprises a proton exchange membrane (PEM) at the middle, with the two sides thereof provided with a layer of catalyst, each of the two outsides of the catalyst is further provided with a gas diffusion layer (GDL). An anode plate and a cathode plate are further provided at the outermost sides adjacent to the GDL. After combining all the above elements together, a cell unit is formed.

For the practical application of a fuel cell, in order to generate a sufficient amount of electricity, oxygen and hydrogen must be supplied to the fuel cell continuously to continue the electrochemical reaction. Oxygen can usually be acquired from the atmospheric air while a special supply device must be used to supply hydrogen to the fuel cell.

One of the known measures of storing hydrogen is to store pressurized, low temperature hydrogen within a pressurized hydrogen bottle, which hydrogen is then recovered to the required operative conditions prior to releasing.

Another known measure of storing hydrogen is to use the so-called metal hydride. Metal hydride is able to discharge hydrogen at a pressure corresponding to the temperature that it experiences; the process of releasing hydrogen is an endothermic reaction. When the hydrogen stored within the metal hydride has been completely exhausted, pure hydrogen can be re-charged back to the metal hydride; the process of charging hydrogen is an exothermic reaction. The temperature which metal hydride experiences is positively proportional to the pressure of the hydrogen to be discharged from the metal hydride, such a proportional relationship may vary among metal hydrides furnished by different suppliers. A hydrogen storage method is disclosed in GB-A-1 531 862.

Due to the highly combustive characteristic of hydrogen, an easy and convenient method for pre-storing hydrogen within a specific container, and for releasing hydrogen as required for performing the above electrochemical reaction is needed.

### Brief Summary of the Invention

It is a primary objective of this invention to provide a supply device for use with a fuel cell, in particular to one that is for use with a hydrogen source of a fuel cell, wherein the supply device is equipped with a heating device so as to enable endothermic reaction of metal hydride filled within the hydrogen source for releasing hydrogen from a gas discharge valve device at a constant pressure.

The supply device of this invention is particularly useful in releasing hydrogen stored within metal hydride.

The major technical content of this invention is to implement at least one receiving tank having therein a compartment for receiving a pressurized bottle filled with metal hydride; and a heating device provided around the compartment for heating the pressurized bottle, so as to enable endothermic reaction of the metal hydride within the pressurized bottle for releasing hydrogen from the gas discharge valve device at a constant pressure.

The structures and characteristics of this invention can be realized by referring to the appended drawings and explanations of the preferred embodiments.

### Brief Description of the Several Views of the Drawings

Fig. 1 is an exploded, perspective view of the supply device for use with a hydrogen source of this invention;
Fig. 2 is another exploded, perspective view showing the supply device for use with a hydrogen source of Fig. 1;
Fig. 3 is an assembled, perspective view showing the supply device for use with a hydrogen source of Fig. 1, and schematic state of water flowing within the water routes;
Fig. 4 is a cross-sectional, schematic view, illustrating the interconnection between the quick connection of the supply device and the gas discharge valve device of the pressurized bottle;
Fig. 5a is a cross-sectional, schematic view, showing the gas discharge valve device in an off state when the pressurized bottle is disconnected from the quick connection of the supply device;
Fig. 5b is a cross-sectional, schematic view, showing the gas discharge valve device in an on state when the pressurized bottle is connected to the quick connection of the supply device; and

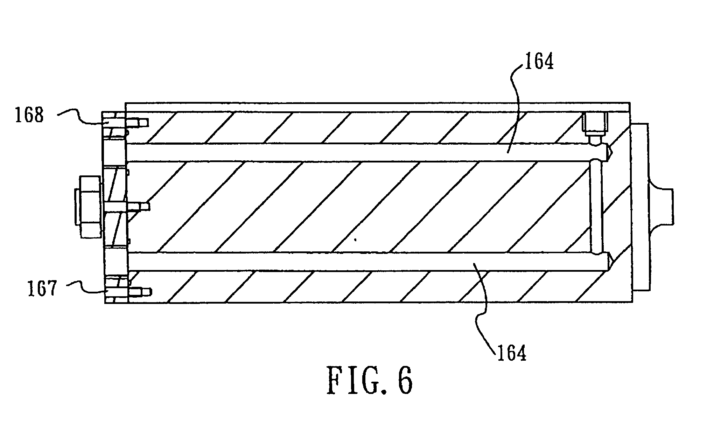

Fig. 6 is cross-sectional view showing the arrangement of the water routes of Fig. 3.

### Detailed Description of the Invention

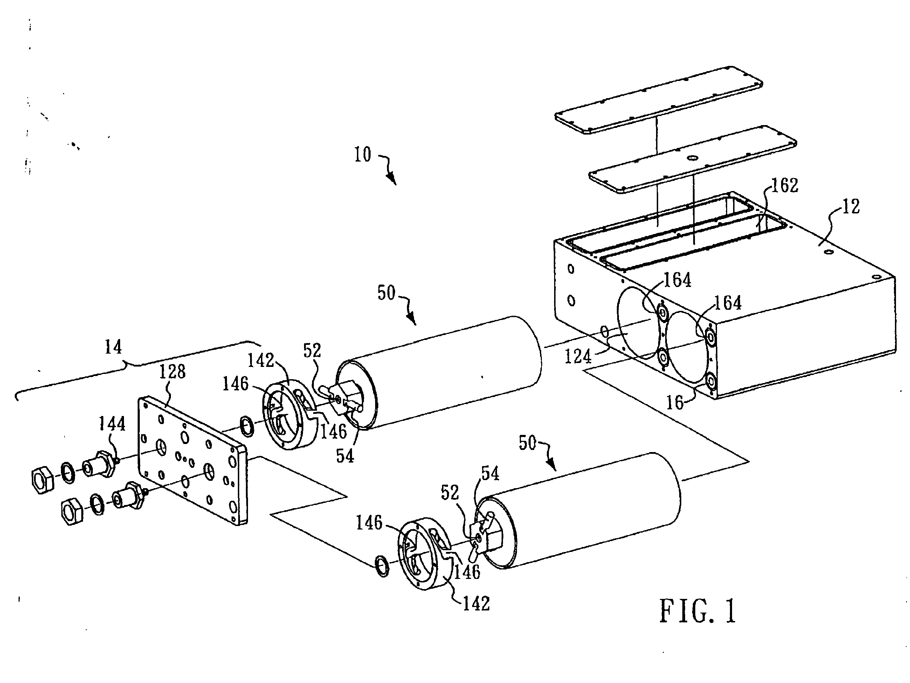

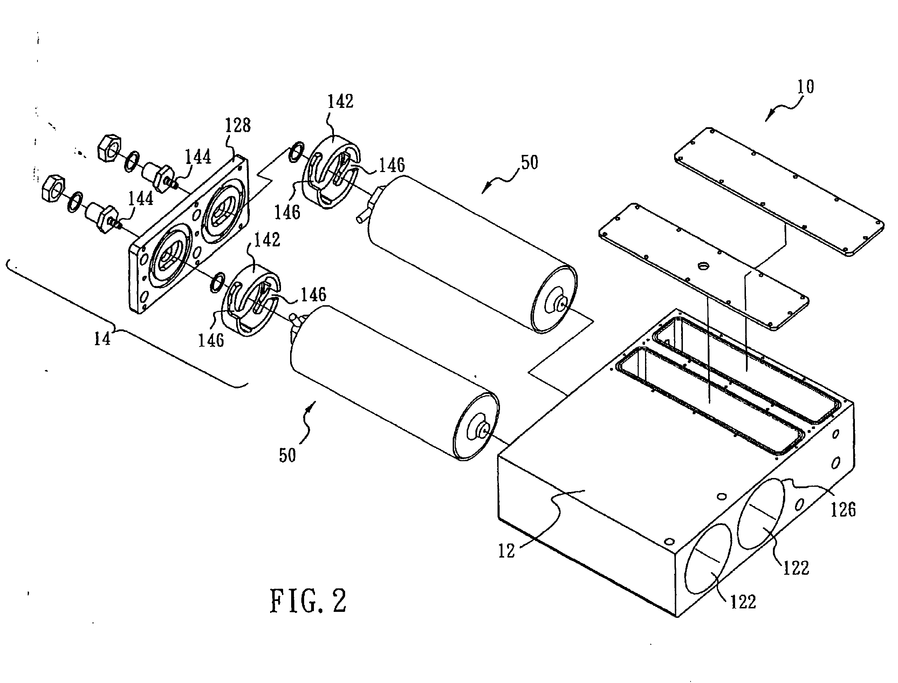

Fig. 1 is an exploded, perspective view of the supply device 10 for use with a hydrogen source of this invention; Fig. 2 is an exploded, perspective view showing another end of the supply device 10.

As illustrated in Figs. 1 and 2, a pressurized bottle 50 that may serve as a hydrogen source in this invention is illustrated in dotted lines, into which pressurized bottle 50 metal hydride (not shown) is filled. The embodiment as illustrated includes two pressurized bottles 50; however, the number of pressurized bottles 50 may vary according to one's needs. Each pressurized bottle 50 includes a bottom end and a port end; a gas discharge valve device 52 is provided at the port end to serve as a gas releasing port.

By referring to other components illustrated in Figs. 1, the supply device 10 comprises: a receiving tank 12, a plurality of quick connections 14, and a heating device.

The receiving tank 12 includes at least one compartment 122 formed therein. In this embodiment, the receiving tank 12 is formed with two compartments 122 for receiving two pressurized bottles 50.

Each compartment 122 includes a closed end 124 and an open end 126. In this embodiment, the compartment 122 is primarily constructed by a bore penetrating the receiving tank 12, at one end of the bore being affixed with a plate 128 to form the closed end 124 of the compartment 122. Other measures may certainly be adopted to form the compartment 122 within the receiving tank 12. The pressurized bottle 50 is placed into the receiving tank 12 through the open end 126 of the compartment 122.

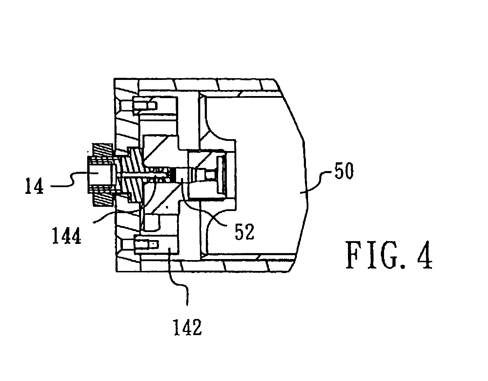

The quick connection 14 is provided at the closed end 124 of the compartment 122. In this embodiment, two quick connections 14 are provided for connection to the two pressurized bottles 5, for activating the gas discharge valve devices 52. Fig. 4 illustrates a cross-sectional view of a quick connection 14. Each quick connection 14 includes: a retaining ring 142 affixed to the plate 128 at the closed end of the compartment 122, and a urge pin 144 perpendicularly projecting from the plate 128 at a center of the retaining ring 142 towards the compartment 122. The retaining ring 142 is formed thereon with a slit 146 inclining towards the plate 128. The slit 146 is to accommodate a locking device 54 (such as rods illustrated in the drawings) provided at the port end of the pressurized bottle 50. As such, when the pressurized bottle 50 is placed into the compartment 122 through the open end 126, and the pressurized bottle 50 is rotated towards the plate 128 by subjecting the locking device 54 of the pressurized bottle 50 to move along the slit 146, so as to be locked to the retaining ring 142, the urge pin 144 is inserted into the gas discharge valve device 52 to activate the gas discharge valve device 52 to discharge gas, as illustrated in Fig. 4.

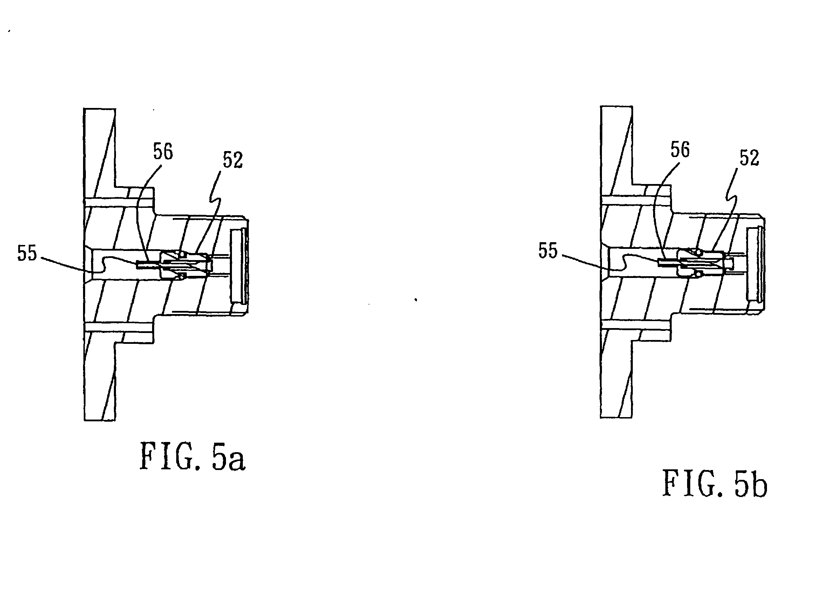

The operations of how the urge pin 144 of the quick connection 14 actuates the pressurized bottle 50 are best illustrated in Figs. 5a and 5b. As illustrated in Fig. 5a, when the pressurized bottle 50 is yet to be connected to the retaining ring 142 of the quick connection 14, a compression spring 56 located around a valve device pin 55 of the valve device 52 is maintained at its expanded state by the gas pressure within the bottle 50, enabling the valve device 50 to its off state and preventing the valve device 50 from leaking gas. When the pressurized bottle 50 is placed into the compartment 122 and locked to the retaining ring 142 of the quick connection 14, the valve device pin 55 is compressed by the urge pin 144 of the quick connection 14 to repulse resilience of the compression spring 56, enabling the valve device pin 55 to retract backwards, as illustrated in Fig. 5b, thereby activating the valve device 52 to discharge the gas within the pressurized bottle 50 at a specific pressure.

The heating device 16 is provided around the compartment 122 for heating the pressurized bottle 50, so as to enable endothermic reaction of the metal hydride within the pressurized bottle 50 for releasing hydrogen from the gas discharge valve device 52 at a constant pressure.

The heating device 16 can be an electric heater, which is powered by the electricity generated by the fuel cell. Any other constant heating device can also be used as a heat source.

In the embodiment as shown in the drawings, hot water is used to serve as the heat source. The heating device 16, as illustrated, includes: a water tank 162 disposed within the receiving tank 12, for storing hot water; and a plurality of water routes flowing around the compartment 122, the water routes being in fluid communication with the water tank 162 such that the hot water may flow around the compartment 122 through the water routes 164.

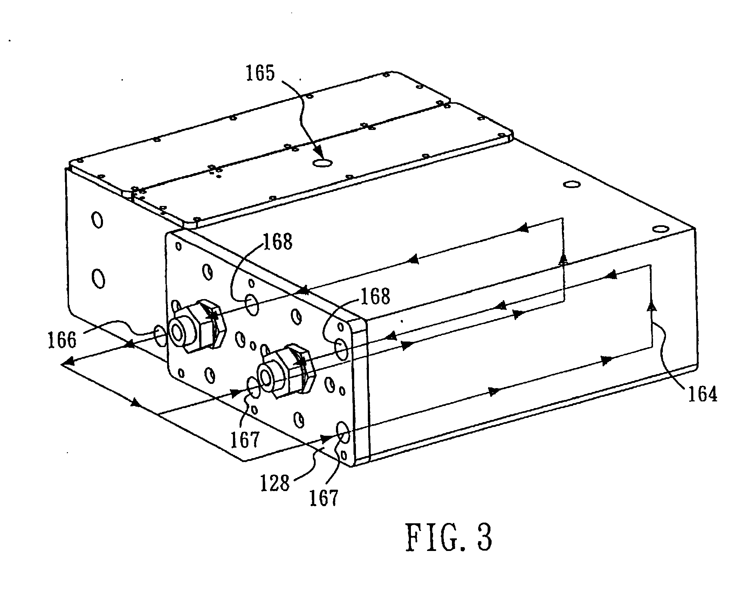

The assembled, perspective view showing the supply device for use with a hydrogen source in Fig. 3 further illustrates the water routes 164 and flowing directions of the hot water; Fig. 5 illustrates a side, cross-sectional view of water routes 164.

As illustrated in Fig. 3, the hot water enters the water tank 162 through a water inport 165 located above the water tank 162, then exits the water tank 162 from a water outport 166 located at a lower end of the water tank 162, and then enters the water routes 164 through a plurality of water inlets 167 formed at a lower end of the plate 128 through piping (not shown), and then exits the water routes 164 through a plurality of water outlets 168 located at a lower end of the plate 128. Because the hot water is flowing around the compartment 122, the heat energy of the hot water is conducted to the pressurized bottle. As stated previously, the process of releasing hydrogen from metal hydride is an endothermic reaction. Hence, the heat energy of the hot water properly serves the purpose required for the endothermic reaction, such that the metal hydride within the pressurized bottle 50 may discharge hydrogen at a selected temperature and at a corresponding pressure.

Since the supply device for use with a hydrogen source utilizes electricity generated by the fuel cell, circulated hot water, or any other possible heating system as the heat source, the supply device is able to continuously heat the metal hydride within the pressurized bottle for releasing hydrogen.

Under actual operations, it is found that fuel cells are most effective when the hydrogen is supplied at a pressure range of 0,345 to 2,07 MPa (50 to 300 psi). Therefore, one may implement an electronic control circuit, temperature sensors, or other conventional means to control the heating device, so as to maintain the pressurized bottle under a temperature that corresponds to the preferred pressure range, in accordance with the specific characteristics of the metal hydride filled within the pressurized bottle. When the hydrogen stored within the metal hydride has been completely exhausted, the pressurized bottle 50 can be rapidly removed from the compartment 122; pure hydrogen can be re-charged back to the metal hydride, which may then again serve as a safe and light hydrogen source.

This invention is related to a novel creation that makes a breakthrough to conventional art. Aforementioned explanations, however, are directed to the description of preferred embodiments according to this invention.
- 10: supply device
- 12: compartment
- 14: quick connection
- 50: pressurized bottle
- 52: gas discharge valve device
- 54: locking device
- 55: valve device pin
- 56: compression spring
- 122: compartment
- 124: closed end
- 126: open end
- 128: plate
- 142: retaining ring
- 144: urge pin
- 146: slit
- 162: water tank
- 164: water route
- 165: water inport
- 166: water outport
- 167: water inlet
- 168: water outlet

## Claims

1. A supply device for use with a hydrogen source, comprising:
at least one pressurized bottle filled with metal hydride, having:
a bottom end;
a port end;
a gas discharge valve device provided at the port end;
a receiving tank having at least one compartment formed therein, for respectively receiving the at least one pressurized bottle; the compartment having a closed end and an open end, through which open end the pressurized bottle is placed in the compartment;
at least one quick connection, provided at the closed end of the at least one compartment, to be connected to the gas discharge valve device of the pressurized bottle received in the compartment for activating the gas discharge valve device to an open position; and
a heating device, provided around the at least one compartment for heating the pressurized bottle received therein, so as to enable endothermic reaction of the metal hydride within the pressurized bottle for releasing hydrogen from the gas discharge valve device at a constant pressure.

2. A supply device according to Claim 1, wherein the heating device includes:
a water tank formed within the receiving tank, for storing hot water;
a plurality of water routes surrounding the compartment, the water routes being in fluid communication with the water tank so as to enable the hot Water to flow around the compartment through the water routes.

3. The supply device according to Claim 1, wherein each quick connection includes:
a retaining ring, affixed to the closed end of the compartment and having a center;
a removable locking device, being connected to the retaining ring and the port end of the pressurized bottle;
an urge pin, projecting from the closed end of the compartment at the center of the retaining ring towards the compartment;
whereby, when the pressurized bottle is placed into the compartment through the open end thereof and the port end of the pressurized bottle is locked to the retaining ring, the urge pin is adapted to be inserted in the gas discharge valve device to activate the gas discharge valve device to discharge the hydrogen.

4. The supply device according to Claim 1, wherein the heating device is a electric heater.

5. The supply device according to Claim 1, wherein the heating device maintains pressure under a pre-determined temperature, subjecting the pressurized bottle to discharge the hydrogen at a corresponding, optimum pressure.

6. The supply device according to Claim 5, wherein the corresponding, optimum pressure falls within a range of 0,345 to 2,07 MPa (50 to 300 psi).

## Patentansprüche

1. Zufuhrvorrichtung zur Verwendung mit einer Wasserstoffquelle, umfassend:
mindestens eine mit Metallhydrid gefüllte Druckflasche mit
einem unteren Ende,
einem Anschlußende, und
einem an dem Anschlußende vorgesehenen Gasablaßventil,
einen Aufnahmetank mit mindestens einer darin ausgebildeten Kammer zur jeweiligen Aufnahme der mindestens einen Druckflasche, wobei die Kammer ein geschlossenes Ende und ein offenes Ende aufweist und die Druckflasche durch das offene Ende in der Kammer plaziert wird,
mindestens eine Schnellverbindung, die an dem geschlossenen Ende der mindestens einen Kammer vorgesehen und mit dem Gasablaßventil der in der Kammer aufgenommenen Druckflasche verbindbar ist, um das Gasablaßventil in eine offene Position zu bewegen, und
eine Heizeinrichtung, die um die mindestens eine Kammer zum Heizen der darin aufgenommenen Druckkammer und Ermöglichen einer endothermen Reaktion des Metallhydrids in der Druckkammer zur Abgabe von Wasserstoff aus dem Gasablaßventil mit einem konstanten Druck vorgesehen ist.

2. Zufuhrvorrichtung nach Anspruch 1, **dadurch gekennzeichnet, daß** die Heizeinrichtung enthält:
einen in dem Aufnahmetank ausgebildeten Wassertank zum Speichern von heißem Wasser,
mehrere die Kammer umgebenden Wasserrouten, wobei die Wasserrouten mit dem Wassertank derart in Flüssigkeitsverbindung stehen, daß das heiße Wasser um die Kammer durch die Wasserrouten fließen kann.

3. Zufuhrvorrichtung nach Anspruch 1, **dadurch gekennzeichnet, daß** jede Schnellverbindung enthält:
einen Sicherungsring, der an dem geschlossenen Ende der Kammer befestigt ist und eine Mitte aufweist,
eine entfernbare Verriegelungseinrichtung, die mit dem Sicherungsring und dem Anschlußende der Druckflasche verbunden ist,
einen Stoßzapfen, der vom geschlossenen Ende der Kammer in der Mitte des Sicherungsrings in Richtung auf die Kammer vorsteht,
wodurch, wenn die Druckflasche in der Kammer durch deren offenes Ende plaziert und das Anschlußende der Druckflasche an dem Sicherungsring verriegelt wird, der Stoßzapfen in das Gasablaßventil einsetzbar ist, um das Gasablaßventil zum Ablassen des Wasserstoffs zu aktivieren.

4. Zufuhrvorrichtung nach Anspruch 1, **dadurch gekennzeichnet, daß** die Heizeinrichtung eine elektrische Heizeinrichtung ist.

5. Zufuhrvorrichtung nach Anspruch 1, **dadurch gekennzeichnet, daß** die Heizeinrichtung den Druck unter einer vorab festgelegten Temperatur beibehält, so daß die Druckflasche den Wasserstoff mit einem korrespondierenden optimalen Druck abläßt.

6. Zufuhrvorrichtung nach Anspruch 5, **dadurch gekennzeichnet, daß** der korrespondierende optimale Druck in einen Bereich von 0,345 bis 2,07 MPa (50 bis 300 psi) fällt.

## Revendications

1. Un dispositif d'alimentation destiné à être utilisé avec une source d'hydrogène comprenant :
au moins une bonbonne sous pression remplie d'hydrure métallique comportant :
une extrémité inférieure;
une extrémité port ;
un élément de valve de décharge gazeuse installé à l'extrémité port;
un réservoir de stockage comportant au moins un compartiment encastré à l'intérieur pour recevoir respectivement au moins une bonbonne sous pression ; le compartiment ayant une extrémité fermée et une extrémité ouverte, à travers l'extrémité ouverte de laquelle la bonbonne sous pression est placée dans le compartiment ;
au moins un verrouillage rapide installé à l'extrémité fermée du au moins un compartiment devant être raccordé à l'élément de valve de décharge gazeuse de la bonbonne sous pression reçue dans le compartiment pour l'activation de l'élément de valve de décharge gazeuse en une position ouverte ; et
un dispositif de chauffage prévu autour du au moins un compartiment pour le chauffage de la bonbonne sous pression reçue en son sein de manière à provoquer une réaction endothermique de l'hydrure métallique au sein de la bonbonne sous pression pour la libération de l'hydrogène de l'élément de valve de décharge gazeuse à une pression constante.

2. Un dispositif d'alimentation selon la Revendication 1, dans lequel le dispositif de chauffage comprend :
un réservoir d'eau installé dans le réservoir de stockage pour stocker l'eau chaude ;
une pluralité de canalisations d'eau entourant le compartiment, les canalisations d'eau étant en communication fluidique avec le réservoir d'eau de manière à permettre à l'eau chaude de circuler autour du compartiment à travers les canalisations d'eau.

3. Dispositif d'alimentation selon la Revendication 1, dans lequel chaque verrouillage rapide comprend :
une bague de retenue apposée sur l'extrémité fermée du compartiment et ayant un centre ;
un dispositif de verrouillage amovible raccordé à la bague de retenue et à l'extrémité port de la bonbonne sous pression ;
une goupille de déclenchement faisant saillie de l'extrémité fermée du compartiment au centre de la bague de retenue en direction du compartiment;
selon lequel quand la bonbonne sous pression est placée dans le compartiment par l'extrémité ouverte de celui-ci et que l'extrémité port de la bonbonne sous pression est verrouillée à la bague de retenue, la goupille de déclenchement est adaptée de manière à être insérée dans l'élément de la valve de décharge gazeuse afin d'activer ce dernier pour qu'il décharge l'hydrogène.

4. Dispositif d'alimentation selon la Revendication 1, dans lequel le dispositif de chauffage est un radiateur électrique.

5. Dispositif d'alimentation selon la Revendication 1, dans lequel le dispositif de chauffage maintient la pression sous une température prédéterminée, soumettant ainsi la bonbonne sous pression à une décharge d'hydrogène à une pression optimale correspondante.

6. Dispositif d'alimentation selon la Revendication 5 dans lequel la pression optimale correspondante descend jusqu'à une plage de 0,345 à 2,07 Mpa (50 à 300 psi).
